# EUROPEAN PATENT APPLICATION

(11) **EP 2 017 058 A2**
(43) Date of publication of application: **21.01.2009**
(21) Application number: 08103425.8
(22) Date of filing: 08.04.2008
(51) Int. Cl.: B29C 45/00

(54) **Apparatus for folding and removing a hinged molded part and associated method of use**

(30) Priority: 17.04.2007 US 736203
(71) Applicant: Husky Injection Molding Systems S.A., 3401 Dudelange (LU)
(72) Inventor: Di Simone, John, Woodbridge Ontario L4L 3N4 (CA)

(57) **Abstract**

An apparatus and method for folding at least one hinged molded part each having a base portion and a projecting member. This includes at least one part removal mechanism that is located within the at least one mold station, wherein the at least one part removal mechanism each further includes a pivotally attached arm and the at least one part removal mechanism grips both the base portion and the projecting member of the at least one hinged molded part and removes the at least one hinged molded part from a mold half in the at least one mold station and then the pivotally attached arm folds the projecting member towards the base portion of the at least one hinged molded part. The pivotally attached arm can grip and remove the at least one folded part away from the at least one part removal mechanism.

## Description

### BACKGROUND OF THE INVENTION

There is a need to perform various operations on the molded articles while these molded articles are still located (or at least partially located) in their respective mold cavities or cores. When the molded part has a base portion and a projecting member, it can be desirable to fold the projecting member against the base portion for further processing. The reasons for folding a projecting member against a base portion immediately can include protecting the integrity of the base portion and projecting member so that the projecting member is not detached or damaged. Other reasons can include maintaining sterility of the base portion and projecting member, or folding the projecting member while it is warm so it will be unstressed in a closed position. This is in addition to the significant advantage of eliminating the need for a separate processing step at later point in time with additional cost and expense.

There are a number of types of devices utilized in the past to remove molded articles from an injection molding machine. For example, although suction cups have been used in the past, such as disclosed in U.S. Patent No. 5,518,387, the main drawback with this disclosed technology is that the entire molded part needed to be removed. If there was a lid, this lid had to be closed in a separate manufacturing step with additional cost and expense. U.S. Patent No. 4,589,840 discloses the use of vacuum to sequentially remove molded articles from an injection molding machine. U.S. Patent No. 4,976,603 is an example of utilizing a suction cup to grasp and rotate a molded plastic article in a ninety degree arc by a cam-operated linkage assembly.

There are a number of references that close a projecting member, e.g., lid, against a base portion for a molded part. This includes U.S. Patent No. 4,340,352 and U.S. Patent No. 4,351,630, which both disclose a device for the in-mold closing of a lid of a cap. The device includes a finger mounted inboard of the mold which slides between the mold sections in an open position, and in the process, engages a portion of the article or the lid, rotates the portion or lid about the hinge, and then a slide moves on top of the lid to snap it shut. This requires two separate mechanical devices to close the lid. Such a dual mechanism is relatively complex and expensive and can add to the cycle time since this dual mechanism must move in, close the lid and move out of the way before the part is ejected and another molding cycle performed.

Commonly assigned U.S. Patent No. 7,168,149 discloses a part removal apparatus that has a portion that, in use, grips one of the base portion of the molded part and moves the part out of the mold when the mold is open. There is a need for a separate deflector mechanism that engages the base portion of the molded part as the molded part is moved to initiate folding of the lid portion to the base portion at a hinge. Also, commonly assigned U.S. Patent Publication No. 2005/0271765 filed May 19, 2005, discloses a side shuttle apparatus whereby closing a cap of a molded container can be carried out by moving the side shuttle across the face of the mold followed by the parts being removed with a suction cup from the injection molding system.

Alternatively, robots are used to capture molded parts and move them out of the molding area where they are closed by a separate apparatus. There is minimal impact on improving cycle time with significant additional complexity and expense.

The present invention is directed to overcoming one or more of the problems set forth above.

### SUMMARY OF THE INVENTION

In an aspect of this invention, an apparatus for folding at least one hinged molded part each having a base portion and a projecting member is disclosed. This includes at least one mold station, wherein each mold station includes at least two movable plates supporting cooperating mold halves, the mold halves being able to move between an open and a closed position, wherein the closed position being operable to mold an article, a drive mechanism operatively connected to the at least two movable plates to move the at least two movable plates between an open position and a closed position, and at least one part removal mechanism that is located within the at least one mold station, wherein the at least one part removal mechanism each further includes a pivotally attached arm, and the at least one part removal mechanism grips both the base portion and the projecting member of the at least one hinged molded part and removes the at least one hinged molded part from a mold half of the cooperating mold halves, and then the pivotally attached arm folds the projecting member towards the base portion of the at least one hinged molded part.

In another aspect of the invention, an apparatus for folding at least one hinged molded part each having a base portion and a projecting member is disclosed. This includes at least one part removal mechanism that is located within the at least one mold station, wherein the at least one part removal mechanism each further includes a pivotally attached arm, and the at least one part removal mechanism grips both the base portion and the projecting member of the at least one hinged molded part and removes the at least one hinged molded part from a mold half in the at least one mold station, and then the pivotally attached arm folds the projecting member towards the base portion of the at least one hinged molded part.

In yet another aspect of the invention, a method for folding at least one hinged molded part each having a base portion and a projecting member is disclosed. This method includes utilizing at least one part removal mechanism, each having a pivotally attached arm, for gripping both the base portion and the projecting member of the at least one hinged molded part, removing the at least one hinged molded part from a mold half in at least one mold station, and folding the projecting member towards the base portion of the at least one hinged molded part with the pivotally attached arm.

These are merely some of the innumerable aspects of the present invention and should not be deemed an all-inclusive listing of the innumerable aspects associated with the present invention. These and other aspects will become apparent to those skilled in the art in light of the following disclosure and accompanying drawings.

### BRIEF DESCRIPTION OF THE DRAWINGS

For a better understanding of the present invention, reference may be made to the accompanying drawings in which:
FIG. 1 is top view of a hinged, molded part having a base portion with a projecting member shown in two locations illustrated as a nonlimiting example of a combination lid and utensil, e.g., spoon;
FIG. 2 is side view of a hinged, molded part, shown in FIG. 1, having a base portion with a projecting member shown in three locations illustrated as a nonlimiting example as a combination lid and utensil, e.g., spoon;
FIG. 3 is a front, perspective top view of the preferred embodiment of an apparatus for folding and removing a hinged, molded part, in accordance with the present invention;
FIG. 4 is a rear, perspective top view of the preferred embodiment of an apparatus for folding and removing a hinged, molded part, in accordance with the present invention;
FIG. 5 is an isolated view of the motorized mechanism and a plurality of part removal mechanisms of the preferred embodiment of an apparatus for folding and removing a hinged, molded part, in accordance with the present invention;
FIG. 6 is an isolated, front, perspective top view of the preferred embodiment of an apparatus for folding and removing a hinged, molded part, in accordance with the present invention;
FIG. 7 is a side view of the preferred embodiment of an apparatus for folding and removing a hinged, molded part, in accordance with the present invention with a chute for part removal;
FIG. 8 is a top view of the preferred embodiment of an apparatus for folding and removing a hinged, molded part, in accordance with the present invention with a chute for part removal;
FIG. 9 is a perspective view of a first alternative embodiment of an apparatus for folding and removing a hinged, molded part, in accordance with the present invention operated by cam drive;
FIG. 10 is a side view of a second alternative embodiment of an apparatus for folding and removing a hinged, molded part, in accordance with the present invention mounted on a support member for utilization with a robotic application; and
FIG. 11 is a front, perspective top view of the second alternative embodiment of an apparatus for folding and removing a hinged, molded part, in accordance with the present invention for utilization with a robotic application.

### DETAILED DESCRIPTION OF THE PREFERRED EMBODIMENT(S)

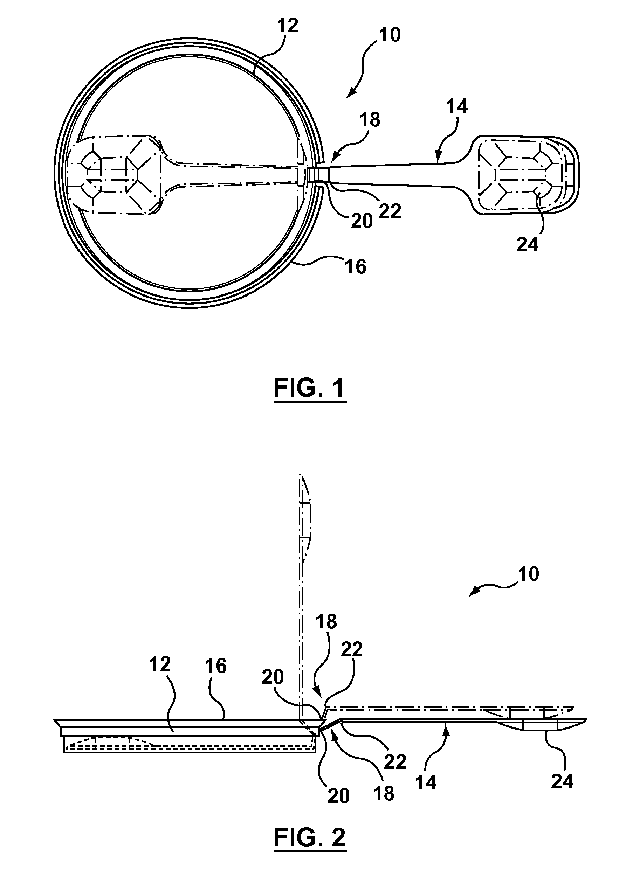

This invention is directed to an injection molding apparatus that is capable of folding a hinged, molded part having a base portion with a projecting member. Referring initially to FIGS. 1 and 2, an illustrative, but nonlimiting, example of a hinged, molded part having a base portion with a projecting member includes a combination lid and utensil, e.g., spoon, which is generally indicated by numeral 10. There is a base portion 12, e.g., lid, which is attached to a projecting member 14, e.g., utensil. Illustrative, but nonlimiting examples of utensils include a spoon (as shown), a knife (not shown) or a fork (not shown). FIG. 1 shows the projecting member 14, e.g., utensil, both extending away from the base portion 12, e.g., lid, and also optionally tucked or latched against a rim 16 of the base portion 12, e.g., lid. The projecting member 14, e.g., utensil, includes a hinge 18 that preferably, but not necessarily, includes a first pivot 20 located distal proximate to the rim 16 and a second pivot 22 that is positioned closer to a functional component, e.g., bowl 24. In addition, FIG. 2 shows the projecting member 14, e.g., utensil, projected upward at a ninety degree angle in relationship to the base portion 12, e.g., lid.

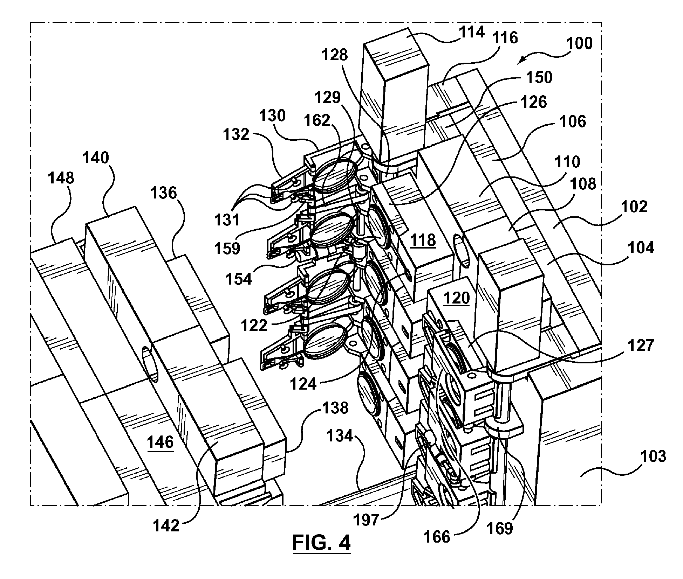

Referring now to FIGS. 1-6, an injection molding system for folding and removing a hinged molded part is generally indicated by numeral 100. A first outer support plate 102 is mounted adjacent to a first inner support plate 104. The first inner support plate 104 supports a first mold core plate 108 and a second inner support plate 106 supports a second mold core plate 110. There are a plurality of first mold cores 120 mounted on the first mold core plate 108 and a plurality of second mold cores 118 mounted on a second mold core plate 110. A representative core component for the base portion 12 of the hinged molded part 10 is indicated by numeral 122 for either the plurality of first mold cores 120 or the plurality of second mold cores 118 and a representative core component for the projecting member 14 of the hinged molded part 10 is indicated by numeral 124 for either the plurality of first mold cores 120 or the plurality of second mold cores 118. A ram-type drive (not shown) can be utilized with the injection molding system 100. An illustrative, but nonlimiting, example of a ram-type drive is disclosed in commonly assigned U.S. Patent Publication No. 2005/0271765, filed May 19, 2005. The injection molding system may include a column 134.

The plurality of first mold cores 120 and the plurality of second mold cores 118 are preferably formed in a one or two dimensional array. There is a first side support member 103 and a second side support member 116 attached to the first outer support plate 102.

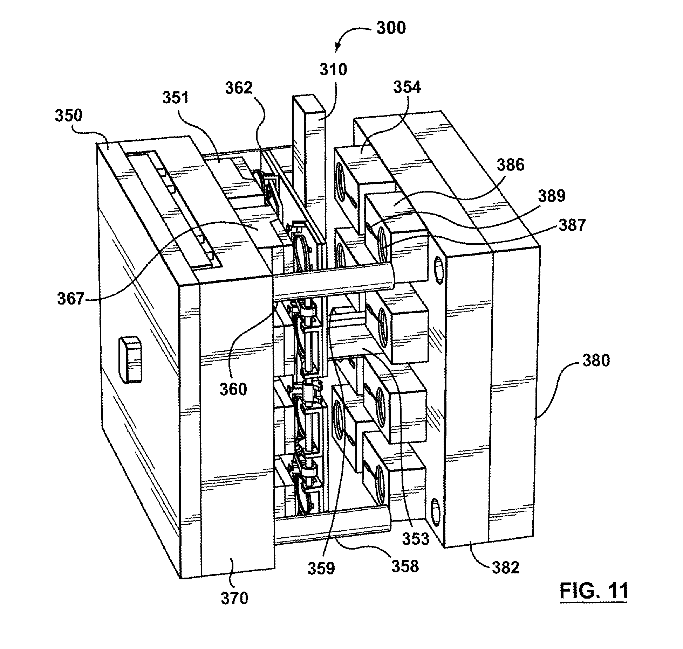

There is a second outer support plate 146 that supports a first mold cavity plate 142 and a third outer support plate 148 that supports a second mold cavity plate 140. There are a plurality of first mold cavities 138 mounted on the first mold cavity plate 142 and a plurality of second mold cavities 136 mounted on a second mold cavity plate 140. The actual mold cavities forming the plurality of first mold cavities 138 and the plurality of second mold cavities 136 are best illustrated by numerals 354 and 386 in FIG. 11 and are preferably formed in a one or two dimensional array. A representative indentation for the base portion 12 of the hinged molded part 10 is indicated by numeral 387 for either the plurality of first mold cavities 354 or the plurality of second mold cavities 386 and a representative indentation for the projecting member 14 of the hinged molded part 10 is indicated by numeral 389 for either the either the plurality of first mold cavities 138 or the plurality of second mold cavities 136.

Referring now to FIGS. 1-8, the second outer support plate 146 is slidably supported and moved in a reciprocal motion. Depending upon the particular injection molding system configuration, the first inner support plate 104 and the second inner support plate 106 may be stationary or it may be movable.

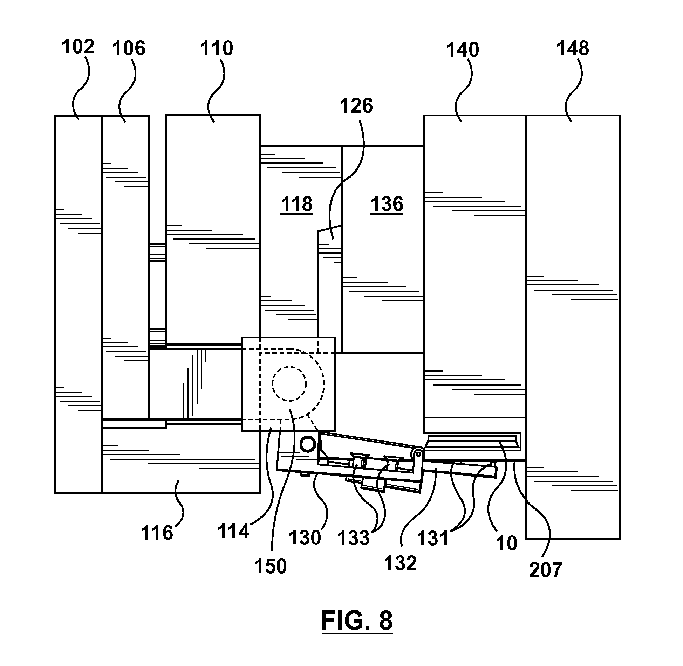

There is preferably a plurality of first part removal mechanisms that are generally indicated by numeral 130. An illustrative, but nonlimiting, example of a part removal mechanism is a swing arm. Each swing arm is preferably connected to a first motorized mechanism that is generally indicated by numeral 114. A wide variety of motorized mechanisms will suffice with the preferred illustrative embodiment being a servo motor. The first motorized mechanism 114 is connected to a first shaft 128 that provides pivoting for the plurality of first part removal mechanisms 130 and is supported by a first hinge frame 150. The plurality of first part removal mechanisms 130 is aligned directly over the plurality of second mold cores 118 and include a first plurality of gripping mechanisms 133, e.g., suction cups that optimally, but not necessarily, utilize applied vacuum, for grabbing and removing the hinged, molded parts 10 from the plurality of second mold cores 118, which are specifically shown in FIG. 8.

Referring again to FIGS. 1-8, when the plurality of first part removal mechanisms 130 are positioned over the hinged, molded part, the first plurality of gripping mechanism 133, e.g., suction cups that optimally, but not necessarily, utilize applied vacuum, can attach to the hinged, molded part 10. The first motorized mechanism 114 can then rotate moving the hinged, molded parts 10 away from the plurality of second mold cores 118. This angle of rotation can vary, and it is optimally around ninety degrees away from the surface of the plurality of second mold cores 118. Optimally, the plurality of first part removal mechanisms 130 start to swing inward toward hinged, molded parts 10 prior to ejection by the plurality of first stripper plates 126. Preferably, but not necessarily, each of the plurality of first part removal mechanisms 130 includes a plate with at least one opening.

Also, there is preferably a first plurality of pivotally attached arms 132 connected to the plurality of first part removal mechanisms 130. The first plurality of pivotally attached arms 132 can each include a solid member with a single hinge or preferably a first portion attached via a hinge to a first part removal mechanism 130 and a second portion attached via a hinge to the same first part removal mechanism 130. Mounted to the first plurality of pivotally attached arms 132 is a second plurality of gripping mechanisms 131, e.g., suction cups optimally with applied vacuum, for removing the hinged, molded part 10 from the first part removal mechanism 130 and by rotating the moving pivotally attached arms 132. The angle of rotation can be from about ninety degrees to about one hundred and eighty degrees with the optimal value being one hundred and eighty degrees.

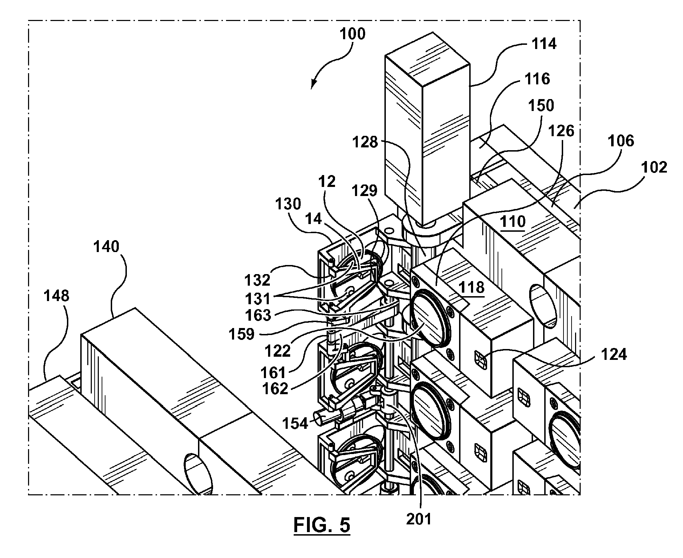

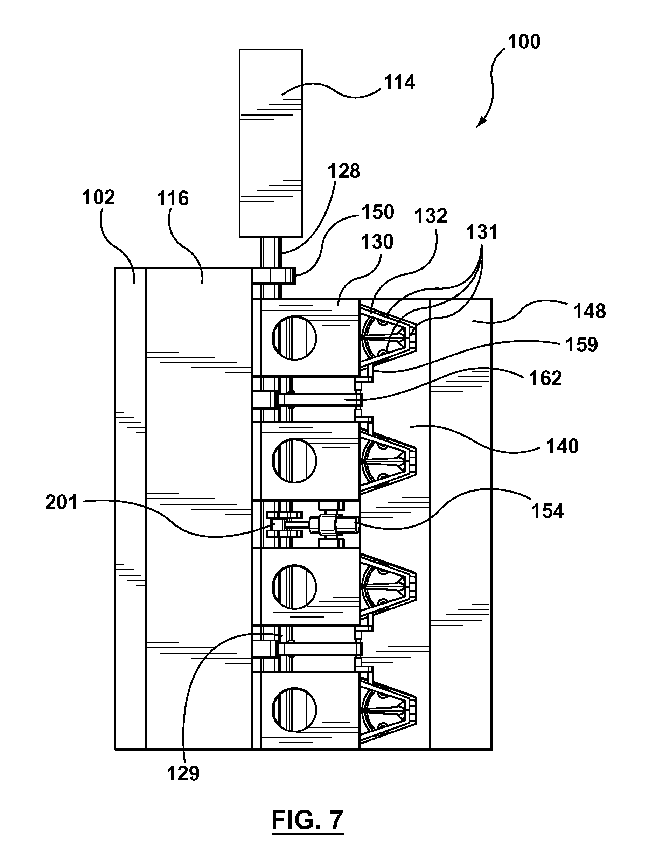

Referring to FIGS. 5 and 7, there is a second shaft 129 for rotating the first plurality of pivotally attached arms 132 in relationship to the plurality of first part removal mechanisms 130. The first plurality of pivotally attached arms 132 is operatively rotated via a plurality of crank members 159 as shown in FIG. 5. The second shaft 129 includes a first plurality of pulleys 163 attached thereto and the first plurality of crank members 159 are attached to a second plurality of pulleys 161. There is preferably, but not necessarily a first plurality of belts 162 each connected between the first plurality of pulleys 161 and the second plurality of pulleys 163. There is preferably, but not necessarily, a displacement mechanism, e.g., cylinder, 154 for rotating the second shaft 129 through a rotatable offset connector 201. An illustrative, but nonlimiting, example of a cylinder includes an air cylinder with a predetermined stroke, e.g., thirty-five millimeters. Each of the first plurality of pulleys 163 is preferably greater in diameter than each of the second plurality of pulleys 161 and optimally there is a two-to-one ratio. The first plurality of pivotally attached arms 132 rotates the projecting member 14, e.g., utensil, towards the base portion 12, e.g., lid, and preferably tucks or latches the projecting member 14, e.g., utensil, against the rim 16 of the base portion 12, e.g., lid.

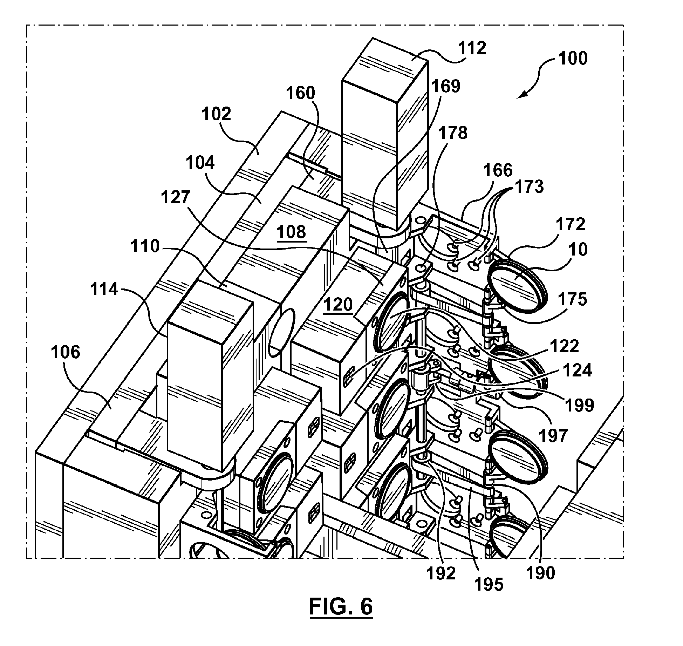

In a corresponding manner, there is preferably a plurality of second part removal mechanisms that are generally indicated by numeral 166 as shown in FIG. 6. An illustrative, but nonlimiting, example of a part removal mechanism is a swing arm. The swing arm is preferably connected to a second motorized mechanism that is generally indicated by numeral 112. A wide variety of motorized mechanisms will suffice with the preferred illustrative embodiment being a servo motor. The second motorized mechanism 112 is connected to a third shaft 169 that provides pivoting for the plurality of second part removal mechanisms 166 and is supported by a second hinge frame 160. The plurality of second part removal mechanisms 166 are aligned directly over the plurality of first mold cores 120 and include a second plurality of gripping mechanisms 173, e.g., suction cups that optimally, but not necessarily, utilize applied vacuum, for grabbing and removing the hinged, molded parts 10 from the plurality of first mold cores 120.

When the plurality of second part removal mechanisms 166 are positioned over a hinged, molded part 10, the second plurality of gripping mechanism 173, e.g., suction cups that optimally, but not necessarily, utilize applied vacuum, can attach to the hinged, molded part 10. The second motorized mechanism 112 can then rotate by moving the hinged, molded parts 10 away from the plurality of first mold cores 120. This angle of rotation can vary, and it is optimally around ninety degrees away from the surface of the plurality of first mold cores 120. Optimally, the plurality of second part removal mechanisms 166 start to swing inward toward hinged, molded parts 10 prior to ejection by the plurality of second stripper plates 127. Preferably, but not necessarily, each of the plurality of first part removal mechanisms 166 includes a plate with at least one opening.

The plurality of first stripper plates 126 and second stripper plates 127 are actuated by an internal actuation mechanism located within the injection molding system 100. This stripper actuation mechanism is best illustrated by a internal actuation plate 365 that is moved by a plurality of rods 363, e.g., three rods, in FIG. 11 and actuated by a clamp (not shown) associated with the molding injection molding system 100.

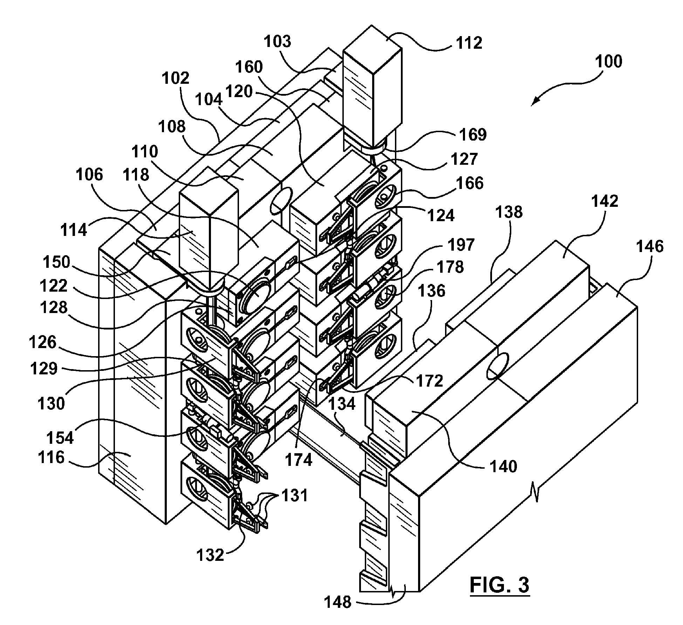

Also, there is preferably a second plurality of pivotally attached arms 172 connected to the plurality of second part removal mechanisms 166. The second plurality of pivotally attached arms 172 can each include a solid member with a single hinge or preferably a first portion attached via a hinge to a second part removal mechanism 166 and a second portion attached via a hinge to the same second part removal mechanism 166. Mounted to the second plurality of pivotally attached arms 172 is a second plurality of gripping mechanisms 174, e.g., suction cups optimally with applied vacuum, for removing the hinged, molded part 10 from the second part removal mechanism 166 and by rotating the moving the second plurality of pivotally attached arms 172, as shown in FIG 3. The angle of rotation can be from about ninety degrees to about one hundred and eighty degrees with the optimal value being one hundred and eighty degrees.

Referring again to FIG. 6, there is a fourth shaft 178 for rotating the second plurality of pivotally attached arms 172 of the plurality of second part removal mechanisms 166. The second plurality of pivotally attached arms 172 is operatively rotated via a second plurality of crank members 175 as shown in FIG. 6. The fourth shaft 178 includes a third plurality of pulleys 192 attached thereto and the second plurality of crank members 175 are attached to a fourth plurality of pulleys 190. There is preferably, but not necessarily a second plurality of belts 195 each connected between the third plurality of pulleys 192 and the fourth plurality of pulleys 190. There is preferably, but not necessarily, a second displacement mechanism, e.g., cylinder, 197 for rotating the fourth shaft 178 through a rotatable offset connector 199. An illustrative, but nonlimiting, example of a cylinder includes an air cylinder with a predetermined stroke, e.g., thirty-five millimeters. Each of the third plurality of pulleys 192 is preferably greater in diameter than each of the fourth plurality of pulleys 190 and optimally there is a two-to-one ratio. The second plurality of pivotally attached arms 172 rotates the projecting member 14, e.g., utensil, towards the base portion 12, e.g., lid, and preferably tucks or latches the projecting member 14, e.g., utensil, against the rim 16 of the base portion 12, e.g., lid.

As shown in FIG. 7, the hinged, molded part 10 is then dropped down a side mounted chute 250. Although this is a feature found on both sides of the injection molding system 100, there is shown in FIG. 8, a projecting ledge 207 that strips the hinged, molded part 10 off the second plurality of gripping mechanisms 131, e.g., suction cups, optimally with applied vacuum, for further processing.

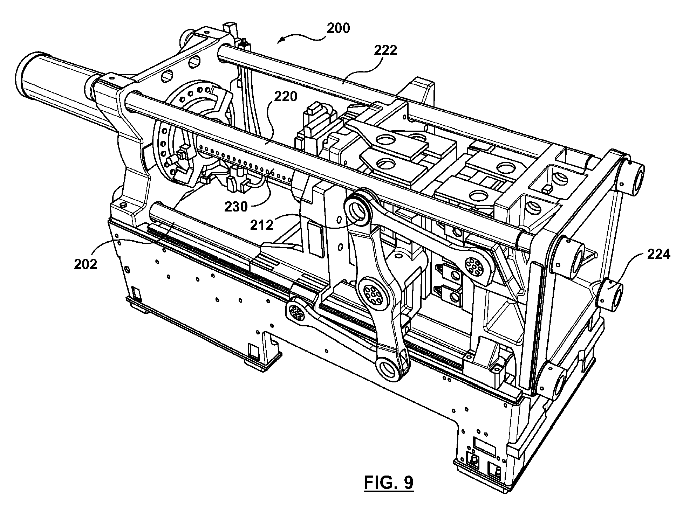

Referring now to FIG. 9, a first alternative embodiment includes a system having cam driven swing chutes that is generally indicated by numeral 200. A drawback to this system is that very tall cam spacers are required to clear platens. There are four tiebars 202, 220, 222 and 224, respectively. There is a column 230 that applies pressure to an arm 212 having a plurality of pivots. The same injection molding machine for folding and removing a hinged molded part 100 previously described above in FIGS. 1-8 is located within this structure providing a mold station. An illustrative, but nonlimiting, example of a cam-operated injection molding machine is disclosed in U.S. Patent No. 4,976,603, assigned to Husky Injection Molding Systems, which issued on December 11, 1990.

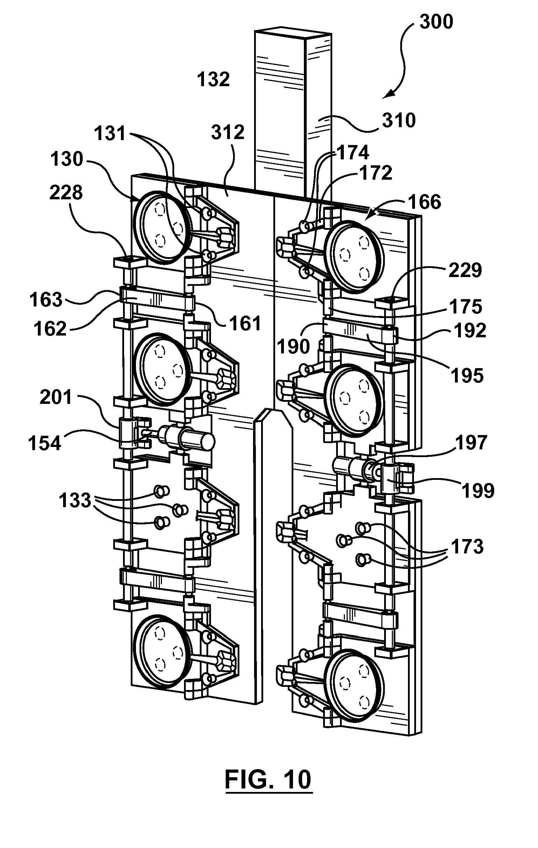

Referring now to FIG. 10, a second alternative embodiment is shown with a support member 312 and an attachment member 310 for utilization with a robotic application. There is preferably a first plurality of pivotally attached arms 132 connected to a plurality of first part removal mechanisms 130. There is preferably also a second plurality of pivotally attached arms 172 attached to a plurality of second part removal mechanism 166. The plurality of first part removal mechanisms 130 include a first plurality of gripping mechanisms 133, e.g., suction cups that optimally, but not necessarily, utilize applied vacuum, for grabbing and removing the hinged, molded parts 10. The plurality of second part removal mechanisms 172 include a second plurality of gripping mechanisms 173, e.g., suction cups that optimally, but not necessarily, utilize applied vacuum, for grabbing and removing the hinged, molded parts 10. The first plurality of pivotally attached arms 132 can each include a solid member with a single hinge or preferably a first portion attached via a hinge to a first part removal mechanism 130. There is preferably also a second portion attached via a hinge to the same first part removal mechanism 130 as well as the second plurality of pivotally attached arms 172, which can each include a solid member with a single hinge or preferably a first portion attached via a hinge to a second part removal mechanism 166 and a second portion attached via a hinge to the same first part removal mechanism 166. Mounted to the first plurality of pivotally attached arms 132 includes a second plurality of gripping mechanisms 131, e.g., suction cups optimally with applied vacuum, and mounted to the second plurality of pivotally attached arms 172 includes a fourth plurality of gripping mechanisms 174, e.g., suction cups optimally with applied vacuum, which are both for removing the hinged, molded part 10 from the first part removal mechanism 130 and the second part removal mechanism 166, respectively, by rotating and moving the first plurality of pivotally attached arms 132 and the second plurality of pivotally attached arms 172, respectively. The angle of rotation can be from about ninety degrees to about one hundred and eighty degrees with the optimal value being one hundred and eighty degrees.

There is a first shaft 228 for rotating the first plurality of pivotally attached arms 132 of the plurality of first part removal mechanisms 130 and a second shaft 229 for rotating the second plurality of pivotally attached arms 172 of the plurality of second part removal mechanisms 166. The first plurality of pivotally attached arms 132 is operatively rotated via a first plurality of crank members 159 and a second plurality of pivotally attached arms 172 is operatively rotated via a second plurality of crank members 175. The first shaft 228 includes a first plurality of pulleys 163 attached thereto and the first plurality of crank members 159 are attached to a second plurality of pulleys 161. The second shaft 229 includes a third plurality of pulleys 192 attached thereto and the second plurality of crank members 175 are attached to a fourth plurality of pulleys 190.

There is preferably, but not necessarily a first plurality of belts 162 each connected between the first plurality of pulleys 163 and the second plurality of pulleys 161. There is preferably, but not necessarily a second plurality of belts 195 each connected between the third plurality of pulleys 192 and the fourth plurality of pulleys 190.

There is preferably, but not necessarily, a displacement mechanism, e.g., cylinder, 154 for rotating the first shaft 228 through a rotatable offset connector 201. There is preferably, but not necessarily, a second displacement mechanism, e.g., cylinder, 197 for rotating the second shaft 229 through a rotatable offset connector 199. An illustrative, but nonlimiting, example of a cylinder includes an air cylinder with a predetermined stroke, e.g., thirty-five millimeters. Each of the first plurality of pulleys 163 is preferably greater in diameter than each of the second plurality of pulleys 161 and optimally there is a two-to-one ratio, and each of the third plurality of pulleys 192 is preferably greater in diameter than each of the fourth plurality of pulleys 190 and optimally there is a two-to-one ratio.

The first plurality of pivotally attached arms 132 and the second plurality of pivotally attached arms 172 rotates the projecting member 14, e.g., utensil, towards the base portion 12, e.g., lid, and preferably tucks or latches the projecting member 14, e.g., utensil, against the rim 16 of the base portion 12, e.g., lid.

Referring now to FIG. 11, the robotic application can lower the attachment member 310 into an injection molding system, which is generally indicated by numeral 300. The operation of the injection molding system 300 operates the same as injection molding system 100, shown in FIGS. 1-8 with regard to molding and stripping away of molded parts. A first outer support plate 350 is mounted adjacent to a first inner support plate 370. The first inner support plate 370 supports a first plurality of mold core plates 351 and a second plurality of mold core plates 367. There is a plurality of first mold cores (not shown) and a plurality of second mold cores (not shown) mounted on the first mold core plate 351 and on the second mold core plate 367. One illustrative, but nonlimiting, example of a mechanism to close the injection molding system 300 includes ram-type drive. There is a plurality of first mold cores and the plurality of second mold cores are preferably formed in a one or two dimensional array. There may, but not necessarily, be a plurality of at least four tie bars, 360, 362, 358, 359, and a center column 353.

A second outer support plate 380 is mounted adjacent to a second inner support plate 382. The second inner support plate 382 supports a first plurality of mold cavities 354 and a second plurality of mold cavities 386. A representative indentation for the base portion 12 of the hinged molded part 10 is indicated by numeral 387 for either the plurality of first mold cavity cavities 354 or the plurality of second mold cavity cavities 386, and a representative indentation for the projecting member 14 of the hinged molded part 10 is indicated by numeral 389 for either the either the plurality of first mold cavities 354 or the plurality of second mold cavities 386.

The second inner support plate 382 is slidably supported and moved in a reciprocal motion. Depending upon the particular injection molding machine configuration, the first inner support plate 370 may be stationary or it may be movable. A drawback to this second alternative embodiment is the requirement that the attachment member 310 must be completely removed from the injection molding system 300. There can be top entry as well as side entry with a split sprue bar or relocating components to clear a sprue bar. A robotic application consumes additional time with additional costs and expenditures that are required with a robotic application. An illustrative, but nonlimiting, example of an injection molding system utilizing robotics is disclosed in U.S. Patent No. 7,125,244, assigned to Husky Injection Molding Systems, which issued on October 24, 2006.

Other aspects, objects and advantages of the present invention can be obtained from a study of the drawings, the disclosure and the appended claims. Thus, there has been shown and described several embodiments of a novel invention. As is evident from the foregoing description, certain aspects of the present invention are not limited by the particular details of the examples illustrated herein, and it is therefore contemplated that other modifications and applications, or equivalents thereof, will occur to those skilled in the art. The terms "have," "having," "includes" and "including" and similar terms as used in the foregoing specification are used in the sense of "optional" or "may include" and not as "required." Many changes, modifications, variations and other uses and applications of the present construction will, however, become apparent to those skilled in the art after considering the specification and the accompanying drawings. All such changes, modifications, variations and other uses and applications which do not depart from the spirit and scope of the invention are deemed to be covered by the invention, which is limited only by the claims that follow.

## Claims

1. An apparatus for folding at least one hinged molded part each having a base portion and a projecting member comprising:
at least one mold station, wherein each mold station includes at least two movable plates supporting cooperating mold halves, the mold halves being able to move between an open and a closed position, wherein the closed position being operable to mold an article;
a drive mechanism operatively connected to the at least two movable plates to move the at least two movable plates between an open position and a closed position; and
at least one part removal mechanism that is located within the at least one mold station, wherein the at least one part removal mechanism each further includes a pivotally attached arm and the at least one part removal mechanism grips both the base portion and the projecting member of the at least one hinged molded part and removes the at least one hinged molded part from a mold half of the cooperating mold halves and then the pivotally attached arm folds the projecting member towards the base portion of the at least one hinged molded part.

2. An apparatus for folding at least one hinged molded part each having a base portion and a projecting member comprising:
at least one part removal mechanism that is located within at least one mold station, wherein the at least one part removal mechanism each further includes a pivotally attached arm and the at least one part removal mechanism grips both the base portion and the projecting member of the at least one hinged molded part and removes the at least one hinged molded part from a mold half in the at least one mold station and then the pivotally attached arm folds the projecting member towards the base portion of the at least one hinged molded part.

3. The apparatus for folding at least one hinged molded part each having a base portion and a projecting member according to Claim 2, wherein the at least one part removal mechanism includes a motorized mechanism for rotating the at least one part removal mechanism for removal of the at least one hinged molded part out of the at least one mold station.

4. The apparatus for folding at least one hinged molded part each having a base portion and a projecting member according to Claim 2, wherein the pivotally attached arm can grip and remove the at least one folded part away from the at least one part removal mechanism.

5. The apparatus for folding at least one hinged molded part each having a base portion and a projecting member according to Claim 2, wherein the at least one part removal mechanism each includes a plate.

6. The apparatus for folding at least one hinged molded part each having a base portion and a projecting member according to Claim 2, wherein the pivotally attached arm each includes at least one first portion having a first hinge that is pivotally attached to the at least one part removal mechanism and at least one second portion having a second hinge that is pivotally attached to the at least one part removal mechanism.

7. The apparatus for folding at least one hinged molded part each having a base portion and a projecting member according to Claim 2, wherein the pivotally attached arm is capable of rotating from about ninety degrees to about one hundred and eighty degrees in relationship to the part removal mechanism to fold the projecting member towards the base portion of the at least one hinged molded part.

8. The apparatus for folding at least one hinged molded part each having a base portion and a projecting member according to Claim 2, wherein the pivotally attached arm is operatively attached to a crank member.

9. The apparatus for folding at least one hinged molded part each having a base portion and a projecting member according to Claim 8, further includes a shaft having at least one first pulley connected thereto operatively and operatively rotated by a cylinder, wherein the crank member is operatively connected to at least one second pulley and at least one belt connected between the at least one first pulley and the at least one second pulley.

10. The apparatus for folding at least one hinged molded part each having a base portion and a projecting member according to Claim 2, wherein the at least one part removal mechanism includes a first plurality of gripping devices attached thereto and the projecting member includes a second plurality of gripping devices attached thereto.

11. The apparatus for folding at least one hinged molded part each having a base portion and a projecting member according to Claim 10, wherein the first plurality of gripping devices includes a first plurality of suction cups and the second plurality of gripping devices includes a second plurality of suction cups.

12. The apparatus for folding at least one hinged molded part each having a base portion and a projecting member according to Claim 2, wherein the at least one part removal mechanism is operatively attached to a support base.

13. The apparatus for folding at least one hinged molded part each having a base portion and a projecting member according to Claim 12, further includes a robot that can selectively attach to the support base for positioning the support base in the at least one mold station and remove the support base from between the at least two movable plates.

14. The apparatus for folding at least one hinged molded part each having a base portion and a projecting member according to Claim 2, wherein the base includes a lid and the projecting member includes a utensil that can fit within a rim for the lid.

15. A method for folding at least one hinged molded part each having a base portion and a projecting member comprising:
utilizing at least one part removal mechanism, each having a pivotally attached arm, for gripping both the base portion and the projecting member of the at least one hinged molded part;
removing the at least one hinged molded part from a mold half in at least one mold station; and
folding the projecting member towards the base portion of the at least one hinged molded part with the pivotally attached arm.
